# EUROPEAN PATENT SPECIFICATION

(11) **EP 0 726 303 B1**
(45) Date of publication and mention of the grant of the patent: **10.11.1999**
(21) Application number: 96300761.2
(22) Date of filing: 05.02.1996
(51) Int. Cl.: C09K 11/02, F21K 2/00, C09K 11/80, C09K 11/74, C09K 11/66, C09K 11/64, C09D 5/22, A01K 85/01

(54) **Light-storing materials and fishing apparatus including such materials**
Lichtaufnahme-Materialen und Angelgerät mit diesen Materialen
Matériaux de stockage de la lumière et appareil de pêche les contenant

(30) Priority: 03.02.1995 JP 113695
(43) Date of publication of application: 14.08.1996
(73) Proprietor: NIHON KAGAKU HAKKO K.K., Kasuya Gun, Fukuoka 811-31 (JP)
(72) Inventor: Harada, Shiro, Tikusino-City, Fukuoka 811-31 (JP); Fujita, Masahiko, Munakata-City, Fukuoka (JP)
(74) Representative: Gallafent, Richard John

(56) References cited:
- EP-A- 0 622 440
- EP-A- 0 710 709
- EP-A- 0 721 007
- DATABASE WPI Section Ch, Week 9629 Derwent Publications Ltd., London, GB; Class E33, AN 96-280653 XP002022828 & JP-A-08 116 845 (TOHO SANGYO KK) , 14 May 1996
- PATENT ABSTRACTS OF JAPAN vol. 95, no. 012 & JP-A-07 324186 (NEMOTO TOKUSHU KAGAKU KK), 12 December 1995,

## Description

This invention relates to light-storing materials and particularly to fishing apparatus, for example floats, lines, hooks, line false baits such as lures, fishing rods, weights and the like for fishing, which are endowed with light-storing properties by coating with a light-storing coating, i.e. a coating which, once exposed to light, re-emits light using a light-storing phenomenon.

Various methods have already been tried in order to make an object emit light. One such method is to use the light-storing phenomenon whereby the energy stored after stimulation by natural light from the sun, moon or the like, by an ultraviolet lamp, or by an electric light or the like is subsequently converted to light and emitted to make the object emit light.

Inorganic compounds which have light-storing properties include sulphide-based ones such as zinc sulphide and cadmium sulphide, and oxoacid salts such as strontium aluminate, and there are objects in which a radioisotope is embedded in a sulphide compound or oxoacid compound so that the radiation causes the light-emission to continue even after the remaining light due to the light-storing properties has disappeared.

Known oxoacid based inorganic compounds include barium magnesium aluminate sustained by europium, and strontium aluminate sustained by europium, neodymium and alkaline earth aluminates represented by MAl₂O₄, where M is magnesium, calcium, strontium or barium, sustained by europium. EP-A-0622440 discloses such compounds.

Even though alkaline earth aluminates with outstanding light-storing characteristics already exist, it has proved difficult to apply them to fishing tackle. One reason for this that might be mentioned is that alkaline earth aluminates sustained by europium or the like sinter at elevated temperatures of 1,200°C to 1,750°C taking several hours, and the object to be coated therefore has to be heat resistant if they are to be directly coated on to the said object.

Further, if one uses a technique which is widely used when an inorganic pigment is used as a coating material, which is to say the method in which a sintered product is ground to a suitable particle size and suspended in a binder, there are problems in that, inter alia, not only do alkaline earth aluminates lose their outstanding light-storing characteristic in conventional binders, but also the coat takes poorly, is susceptible to peeling, and its durability is poor when it is used under severe conditions outdoors.

The poor coat "take" and the susceptibility to peeling have been improved by a good selection of an acrylic-based or urethane-based or epoxy-based binder which is strongly adhesive. Also, the reason for the loss of the outstanding light-storing characteristic of the alkaline earth aluminates when the formulation is prepared, is that the alkaline earth aluminates precipitate out in the coating material. The problems have been overcome by preparing the formulation with a precipitation-preventing agent such as polyamino amide phosphates which are cationic, and polycarboxylic acid salts which are anionic or neutral in order to prevent the precipitation of the alkaline earth aluminate.

When the novel binder and precipitation-preventing agent are formulated in a light-storing pigment mainly consisting of an alkaline earth aluminate sustained by europium or the like, a coating material is provided which does not lose the light-storing characteristic of the alkaline earth aluminate sustained by europium or the like, which is to say in which the energy accumulated by stimulation is not prevented from being subsequently converted into light and released, and which adheres strongly to a coating surface and is highly durable.

Thus in accordane with its broadest aspect, the present invention provides a light-storing coating material consisting of a light-storing agent and a binder medium, characterised in that the material includes an acrylic-based or urethane-based or epoxy-based binder, and a precipitation-preventing agent, wherein the light-storing agent comprises at least one alkaline earth aluminate represented by MAl₂O₄, wherein M is selected from magnesium, calcium, strontium and barium, and at least one sustaining agent based on one or more of the lanthanide elements lanthanum, cerium, praseodymium, neodymium, promethium, samarium, europium, gadolinium, terbium, dysprosium, holmium, erbium, thulium, ytterbium and lutetium, manganese, tin and bismuth.

Preferably the precipitation-preventing agent is a cationic polyamino amide phsophate or an anionic or neutral polycarboxylic acid salt.

The coating materials of the present invention are of particular value in imparting light-emitting properties to items of fishing equipment. Various items of fishing tackle and other equipment used when fishing using the materials of the present invention are described in the following embodiments. However, items of fishing tackle with which the present invention can be used are not limited to the items of fishing tackle given in the embodiments. Analogous uses for the coating materials in other areas can easily be imagined, though in many areas the performance of known light-storing materials is satisfactory. The coating materials may be applied as a coating to all or part of any article, or may be applied, e.g. by screen printing, to a suitable substrate to provide a self-illuminating sign, legend, logotype, warning marking or the like.

The invention is illustrated, by way of example, with reference to the accompanying drawings, in which:

Figure 1 is a schematic view of a light-storing coating material.

Figure 2 is a schematic view of a fishing line.

Figure 3 is a schematic view of a fishing hook.

Figures 4 to 6 are cross-sections of three types of fishing hook.

Figures 7 and 8 are schematic views of two types of fishing hook.

Figures 9 and 10 are schematic views of fishing floats.

Figure 11 is a schematic view of a false bait.

Figure 12 is a schematic view showing use of the false bait of Figure 11.

Figure 13 is a schematic view of a fishing weight.

Figure 14 is a schematic view of a fishing rod.

Figure 15 is a schematic view of a fishing rod guide.

Figure 16 is a schematic view of a fishing rod reel.

Figure 17 is a schematic view of a biizu or bead.

Figure 18 is a schematic view of an example of the use of a sheet for a sheet for a life-saving article in which a sheet for a life-saving article is fitted to a life-saving jacket.

Figures 19 and 20 are schematic views of a fishing lure of the type known as bura.

Figure 21 is a schematic view of a tape.

Figure 22 is a schematic view of a stick which has been coated on its outside with a light-accumulating coating material and both ends of which are open.

Figure 23 is a schematic view of a stick which has been coated on its outside with a light-accumulating coating material and both ends of which are closed.

Figure 24 is a schematic view of a stick which has been coated on its inside with a light-storing coating material and both ends of which are closed.

Figure 25 is a schematic view of a sirt (kabura).

Figure 26 is a schematic view of an example of the use of the kabura when attached to a fishing rod.

Figure 27 is a schematic view of an insignia.

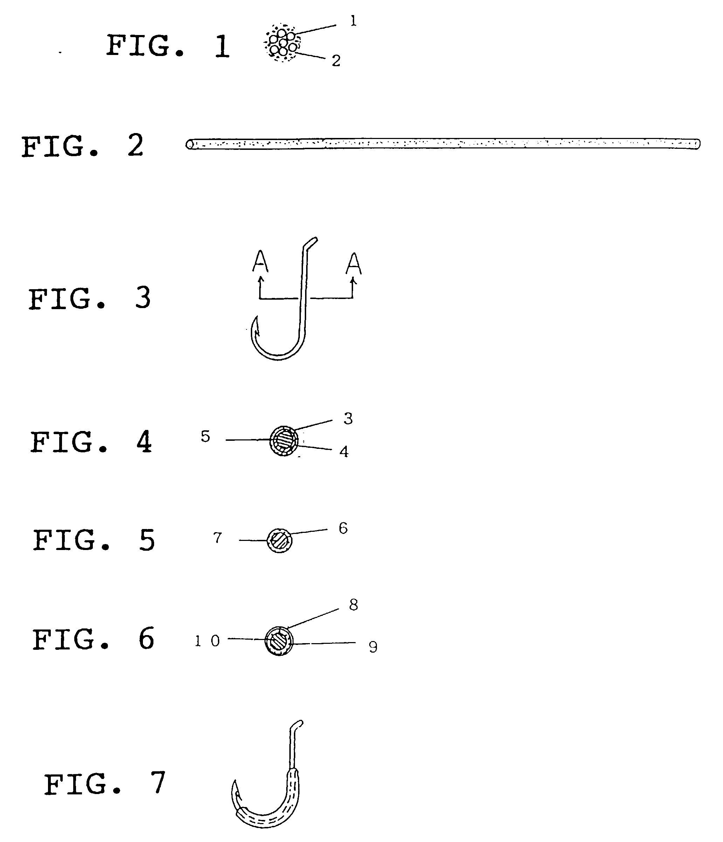

The convention has been adopted in these figures that parts of the objects shown which are or which bear light-storing coatings are shown stippled. This applies to Figures 2 and 8 to 26.

Referring to the figures, Figure 1 is a schematic view showing the state of the light-storing coating material according to the invention in which a light-storing pigment 2 mainly consisting of an alkaline earth aluminate sustained by europium or the like is mixed with a precipitation-preventing agent and an acrylic-based or urethane-based or epoxy-based binder in monofilament form 1.

In a preferred example of a formulation of the light-storing coating material, the proportions by weight in a coating formulation which may be applied to the desired object and then allowed to dry or cure by solvent evaporation are: acrylic resin varnish 30 to 40 parts; precipitation-preventing agent 3 to 5 parts; solvent 5 to 10 parts, and the light-storing pigment 50 to 60 parts. Commercially available materials may be used. For example the acrylic resin varnish may be that sold under the trade name "Akurideikku A-167" which is a 50% toluene solution of acrylic resin made by Dainippon Ink Kagaku Kogyo, and the precipitation-preventing agent may be that sold under the trade name "Anti-Terra-P" made by the Byk Chemie Company.

Figure 2 is a schematic view of a fishing line on which the light-storing coating material shown in Figure 1 has been coated. The fishing line is coated by being plunged into the light-storing coating material.

Figure 3 is a schematic view of a fishing hook on which the above light-storing coating material has been coated. The light-storing coating material is coated over the whole of the fishing hook.

Figure 4, Figure 5 and Figure 6 are all cross-sections along A-A in Figure 3. In Figure 4, a pre-coat 4 of a white coating material is coated on to the hook shaft 5 and is overcoated with a coating 3 of the light-storing coating material of the invention. If a coloured coating material other than a white coating material is used, the light-storing performance of the alkaline earth aluminate sustained by europium or the like of the present invention is impaired as compared with when a white coating material is used.

In Figure 5, the light-storing coating 6 is applied to a pre-plated surface of the metal hook shaft 7. The mirror surface added by the plating makes the light-storing performance of the alkaline earth aluminate sustained by europium or the like of the present invention more effective.

In Figure 6, a clear coating material 8 is further coated on to the light-storing coating 9 of a hook with a shaft 10. This extra coating 8, effectively on the exterior of a hook as shown in Figure 5, gives greater durability.

Figure 7 is a schematic view of a fishing hook on which the light-storing coating material noted above has been coated. The light-storing coating is not put on the sharp portion at the front of the fishing hook nor on the portion at the base of the fishing hook where the line is tied.

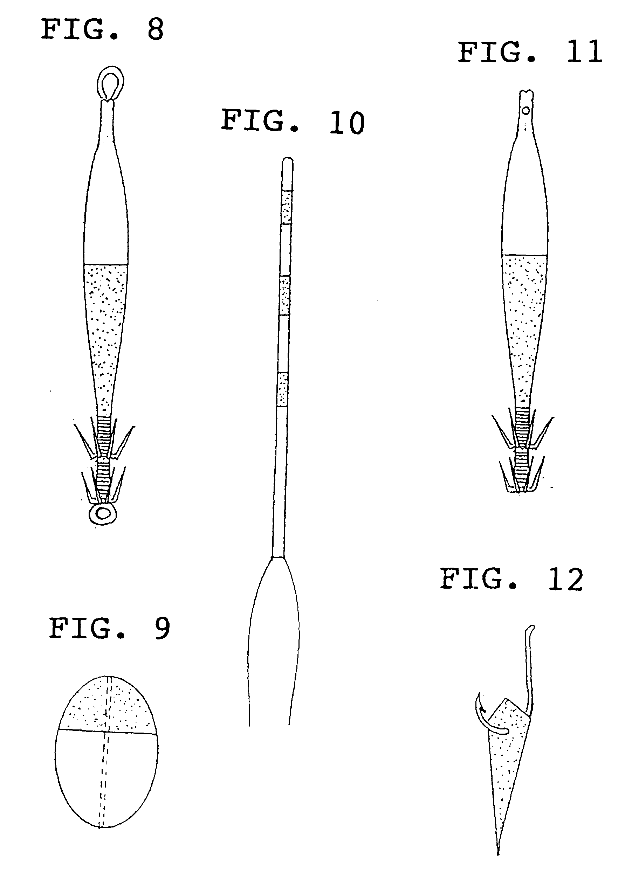

Figure 8 is a schematic view of a fishing hook in which the above light-storing coating material has been coated on an appropriate portion of the trunk. This fishing line is used when fishing for squid. Squid have a nature whereby they gather around lights, and this is a hook for fishing squid which also has a fish-gathering effect.

Figure 9 is a schematic view of a float in which the above light-storing coating material has been coated on an appropriate portion of the trunk. This float is commonly known as an "acorn float" on account of its shape.

Figure 10 is a schematic view of a float in which the above light-storing coating material has been coated on appropriate portions of the tip.

Figure 11 is a schematic view of the false bait in which the above light-storing coating material has been coated on an appropriate portion of the trunk. This false bait has a streamlined shape and in the water it is able to reproduce movements similar to the movements of an animal which the fish normally feeds on. The fish-gathering effect can be enhanced by adding light to these movements.

Figure 12 is a schematic view of the use of one false bait in which the above light-storing coating material has been coated on to a synthetic resin or the like and cut to an appropriate shape and attached to a fishing hook. The fish-gathering effect can be enhanced by emitting light. The false bait also includes what are normally known as "lures", what are normally known as "spoons" and what are normally known as "flyers".

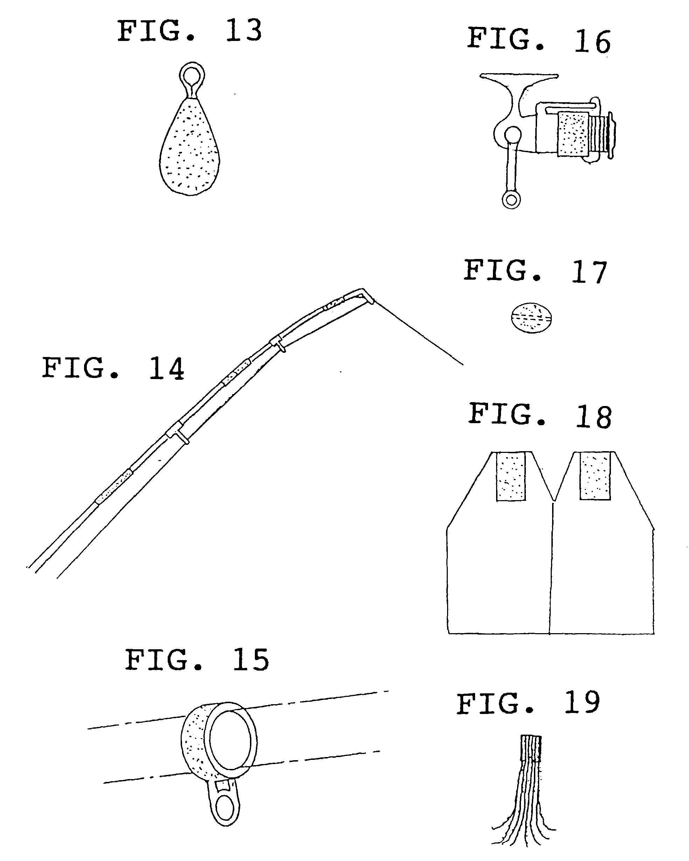

Figure 13 is a schematic view of a weight on which the above light-storing coating material has been coated.

Figure 14 is a schematic view of a fishing rod in which the above light-storing coating material has been coated on appropriate portions of the body.

Figure 15 is a schematic view of a fishing rod guide on which the above light-storing coating material has been coated.

Figure 16 is a schematic view of a reel on which the above light-storing coating material has been coated.

Figure 17 is a schematic view of a biizu or bead on which the above light-storing coating material has been coated.

Figure 18 is a schematic view of an example of the use of a sheet for a life-saving article wherein the sheet for a life-saving article which has been coated with the above light-storing coating material is fitted to a life jacket.

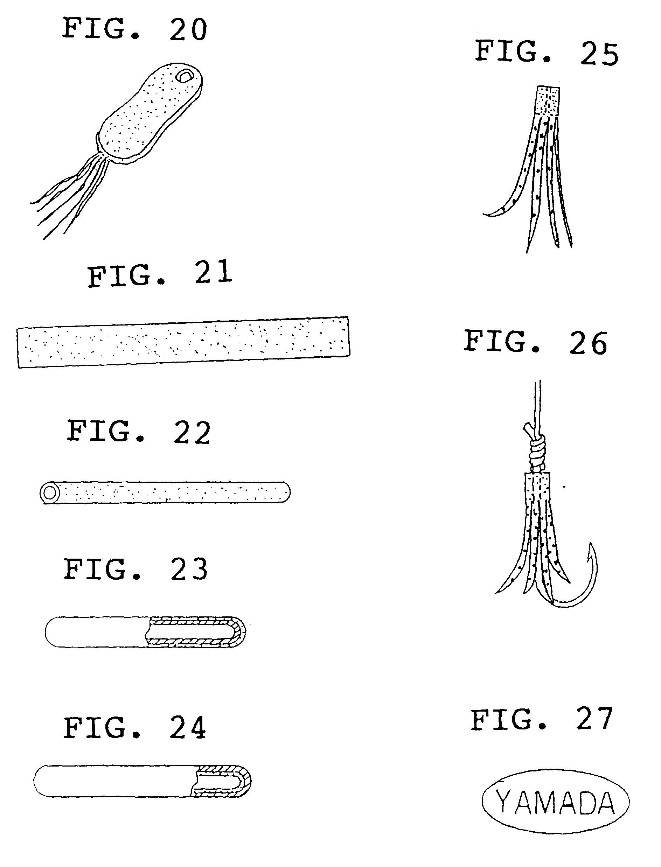

Figure 19 is a schematic view of a fishing line of the type known as a bura. Fibres have been bundled together and attached in a tube. In Figure 20 a plate of metal is attached around a tube. One may also coat the above light-storing coating material on the tube or metal plate.

Figure 21 is a schematic view of a tape on which the above light-storing coating material has been coated. An adhesive can be attached to the rear surface.

Figure 22 is a schematic view of a stick on which the above light-storing coating material has been coated. It comprises a soft or hard synthetic resin, the inside of which is hollow and which is open at both ends. It is used after having been cut to an appropriate length.

Figure 23 and Figure 24 are schematic views of sticks in which the above light-storing coating material has been coated on the outside in Figure 23 and on the inside in Figure 24. It comprises a soft or hard synthetic resin, the inside of which is hollow and which is closed at both ends.

Figure 25 is a schematic view of a skirt (kabura) involving a combination of a long, thin, soft, synthetic resin and tube on which the above light-storing coating material has been coated in a dappled pattern of spots. Figure 26 is a schematic view of the kabura in use when it is attached to a fishing hook.

Figure 27 is a schematic view of an insignia such as a written name or logo on which the above light-storing coating material has been coated, or which has been printed using the light-storing coating material. If the item bearing it has been exposed to light, e.g. during the daytime, it will remain visible for a long time at night because of the light-storing properties of the novel coating material.

In all of the items shown in Figures 2 to 27, the items may be caused to emit light by exposing them to intense light, e.g. a powerful torch or car headlight, for a few minutes, whereafter it will emit light at night for a long time, either in the air or in the water, due to the properties of the alkaline earth aluminate sustained by europium or the like.

As described above, the present invention provides a wide range of fishing apparatus, equipment or accessories which emit light. Such fishing items which have been endowed with light-emitting properties emit light as desired, and exhibit a fish-gathering effect or enhance visual recognition during night-time use depending on the application to which the item is put.

## Claims (Claims for the following Contracting State(s): AT, BE, CH, LI, DK, GR, IE, LU, MC, NL, PT, SE)

1. A light-storing coating material consisting of a light-storing agent and a binder medium, characterised in that the material includes an acrylic-based or urethane-based or epoxy-based binder, and a precipitation-preventing agent, wherein the light-storing agent comprises at least one alkaline earth aluminate represented by MAl₂O₄, wherein M is selected from magnesium, calcium, strontium and barium, and at least one sustaining agent based on one or more of the lanthanide elements lanthanum, cerium, praseodymium, neodymium, promethium, samarium, europium, gadolinium, terbium, dysprosium, holmium, erbium, thulium, ytterbium and lutetium, manganese, tin and bismuth.

2. A light-storing coating material according to claim 1 wherein the precipitation-preventing agent is a cationic polyamino amide phosphate or an anionic or neutral polycarboxylic acid salt.

3. A fishing accessory characterised in that it is coated with a light-storing coating material consisting of an acrylic-based or urethane-based or epoxy-based binder and a precipitation-preventing agent, using, as the light-storing agent, an alkaline earth aluminate represented by MAl₂O₄, wherein M is one or a plurality of the elements magnesium, calcium, strontium and barium, and wherein the sustaining agent employed, suitably selecting one or a plurality of the lanthanide elements lanthanum, cerium, praseodymium, neodymium, promethium, samarium, europium, gadolinium, terbium, dysprosium, holmium, erbium, thulium, ytterbium and lutetium, manganese, tin and bismuth.

4. A light-storing coating material according to Claim 3 wherein the precipitation-preventing agent is a cationic polyamino amide phosphate or an anionic or neutral polycarboxylic acid salt.

5. A fishing accessory according to Claim 3 or 4 characterised in that the sustaining element is selected from europium, gadolinium and mixtures thereof.

6. A fishing accessory according to any one of Claims 3 to 5 wherein the alkaline earth aluminate is strontium aluminate.

7. A fishing accessory according to any one of Claims 3 to 5 wherein the alkaline earth aluminate is a barium magnesium aluminate.

8. A fishing accessory according to Claim 7 wherein the barium magnesium aluminate has a composition corresponding substantially to the formula Ba_{0.9}Mg₂Al₁₆O₂₇.

9. A fishing accessory according to any one of Claims 3 to 8 and constructed as a fishing hook, float, line, false bait, weight, fishing rod, fishing rod guide, reel, bead, biizu, sheet for a life-saving article, bura, fishing lure, tape, stick, skirt (kabura) or insignia.

## Claims (Claims for the following Contracting State(s): DE, ES, FR, GB, IT)

1. A fishing accessory characterised in that it is coated with a light-storing coating material consisting of an acrylic-based or urethane-based or epoxy-based binder and a precipitation-preventing agent, using, as the light-storing agent, an alkaline earth aluminate represented by MAl₂O₄, wherein M is one or a plurality of the elements magnesium, calcium, strontium and barium, and wherein the sustaining agent employed, suitably selecting one or a plurality of the lanthanide elements lanthanum, cerium, praseodymium, neodymium, promethium, samarium, europium, gadolinium, terbium, dysprosium, holmium, erbium, thulium, ytterbium and lutetium, manganese, tin and bismuth.

2. A fishing accessory coating material according to claim 1 wherein the precipitation-preventing agent is a cationic polyamino amide phosphate or an anionic or neutral polycarboxylic acid salt.

3. A fishing accessory according to Claim 1 or 2, characterised in that the sustaining element is selected from europium, gadolinium and mixtures thereof.

4. A fishing accessory according to any one of Claims 1 to 3 wherein the alkaline earth aluminate is strontium aluminate.

5. A fishing accessory according to any one of Claims 1 to 3 wherein the alkaline earth aluminate is a barium magnesium aluminate.

6. A fishing accessory according to Claim 5 wherein the barium magnesium aluminate has a composition corresponding substantially to the formula Ba_{0.9}Mg₂Al₁₆O₂₇.

7. A fishing accessory according to any one of Claims 1 to 6 and constructed as a fishing hook, float, line, false bait, weight, fishing rod, fishing rod guide, reel, bead, biizu, sheet for a life-saving article, bura, fishing lure, tape, stick, skirt (kabura) or insignia.

## Patentansprüche (Patentansprüche für folgende(n) Vertragsstaat(en): AT, BE, CH, LI, DK, GR, IE, LU, MC, NL, PT, SE)

1. Lichtspeicherndes Beschichtungsmaterial, bestehend aus einem lichtspeichernden Mittel und einem Bindemittel, dadurch gekennzeichnet, daß das Material ein Bindemittel auf Acryl-, Urethan- oder Epoxybasis und ein Fällungsverhinderungemittel enthält, wobei das lichtspeichernde Mittel mindestens ein Erdalkalimetallaluminat der Formel MAl₂O₄, worin M aus Magnesium, Calcium, Strontium und Barium ausgewählt ist, und mindestens ein Unteretützungemittel auf der Basis eines oder mehrerer der Lanthanidenelemente Lanthan, Cer, Praseodym, Neodym, Promethium, Samarium, Europium, Gadolinium, Terbium, Dysprosium, Holmium, Erbium, Thulium, Ytterbium und Lutetium sowie Mangan, Zinn und Bismut enthält.

2. Lichtspeicherndes Beschichtungsmaterial nach Anspruch 1, worin das Fällungsverhinderungsmittel ein kationisches Polyaminoamidphoshat oder ein anionisches oder neutrales Polycarbonsäuresalz ist.

3. Fischereizubehör, dadurch gekennzeichnet, daß es mit einem lichtspeichernden Beschichtungsmaterial beschichtet ist, das aus einem Bindemittel auf Acryl-, Urethan- oder Epoxybasis und einem Fällungsverhinderungsmittel besteht, wobei als lichtspeicherndes Mittel ein Erdalkalimetallaluminat der Formel MAl₂O₄ dient, worin M eines oder mehrere der Elemente Magnesium, Calcium, Strontium und Barium bedeutet, und worin das eingesetzte Unterstützungsmittel aus einem oder mehreren der Lanthanidenelemente Lanthan, Cer, Praseodym, Neodym, Promethium, Samarium, Europium, Gadolinium, Terbium, Dysprosium, Holmium, Erbium, Thulium, Ytterbium und Lutetium sowie Mangan, Zinn und Bismut ausgewählt ist.

4. Lichtspeicherndes Beschichtungsmaterial nach Anspruch 3, worin das Fällungsverhinderungsmittel ein kationisches Polyaminoamidphoshat oder ein anionisches oder neutrales Polycarbonsäuresalz ist.

5. Fischereizubehör nach Anspruch 3 oder 4, dadurch gekennzeichnet, daß das unterstützende Element aus Europium, Gadolinium und Gemischen hiervon ausgewählt ist.

6. Fischereizubehör nach einem der Ansprüche 3 bis 5, worin das Erdalkalimetallaluminat Strontiumaluminat ist.

7. Fischereizubehör nach einem der Ansprüche 3 bis 5, worin das Erdalkalimetallaluminat ein Bariummagnesiumaluminat ist.

8. Fischereizubehör nach Anspruch 7, worin das Bariummagnesiumaluminat eine Zusammeneetzung aufweist, die im wesentlichen der Formel Ba_{0,9}Mg₂Al₁₆O₂₇ entspricht.

9. Fischereizubehör nach einem der Ansprüche 3 bis 8, das als Angelhaken, Schwimmer, Angelschnur, falscher Köder, Gewicht, Angelrute, Angelrutenführung, Spule, Perle, Biizu, Flächenmaterial für einen Lebensrettungsgegenstand, Bura, Angellure, Klebeband, Stock, Saum (Kabura) oder Abzeichen ausgebildet ist.

## Patentansprüche (Patentansprüche für folgende(n) Vertragsstaat(en): DE, ES, FR, GB, IT)

1. Fischereizubehör, dadurch gekennzeichnet, daß es mit einem lichtspeichernden Beschichtungsmaterial beschichtet ist, das aus einem Bindemittel auf Acryl-, Urethan- oder Epoxybasis und einem Fällungsverhinderungamittel besteht, wobei als lichtspeicherndes Mittel ein Erdalkalimetallaluminat der Formel MAl₂O₄ dient, worin M eines oder mehrere der Elemente Magnesium, Calcium, Strontium und Barium bedeutet, und worin das eingesetzte Unterstützungsmittel aus einem oder mehreren der Lanthanidenelemente Lanthan, Cer, Praseodym, Neodym, Promethium, Samarium, Europium, Gadolinium, Terbium, Dysprosium, Holmium, Erbium, Thulium, Ytterbium und Lutetium sowie Mangan, Zinn und Bismut ausgewählt ist.

2. Beschichtungsmaterial für Fischereizubehör nach Anspruch 1, worin das Fällungeverhinderungsmittel ein kationisches Polyaminoamidphoshat oder ein anionisches oder neutrales Polycarbonsäuresalz ist.

3. Fischereizubehör nach Anspruch 1 oder 2, dadurch gekennzeichnet, daß das unterstützende Element aus Europium, Gadolinium und Gemischen hiervon ausgewählt ist.

4. Fischereizubehör nach einem der Ansprüche 1 bis 3, worin das Erdalkalimetallaluminat Strontiumaluminat ist.

5. Fischereizubehör nach einem der Ansprüche 1 bis 3, worin das Erdalkalimetallaluminat ein Bariummagnesiumaluminat ist.

6. Fischereizubehör nach Anspruch 5, worin das Bariummagnesiumaluminat eine Zusammensetzung aufweist, die im wesentlichen der Formel Ba_{0,9}Mg₂Al₁₆O₂₇ entspricht.

7. Fischereizubehör nach einem der Ansprüche 1 bis 6, das als Angelhaken, Schwimmer, Angelschnur, falscher Köder, Gewicht, Angelrute, Angelrutenführung, Spule, Perle, Biizu, Flächenmaterial für einen Lebensrettungsgegenstand, Bura, Angellure, Klebeband, Stock, Saum (Kabura) oder Abzeichen ausgebildet ist.

## Revendications (Revendications pour l'(les) Etat(s) contractant(s) suivant(s): AT, BE, CH, LI, DK, GR, IE, LU, MC, NL, PT, SE)

1. Matériau de revêtement stockant la lumière constitué d'un agent de stockage de la lumière et d'un support de liant, caractérisé en ce que le matériau comprend un liant à base acrylique ou à base uréthane ou à base époxy, et un agent antiprécipitation, dans lequel l'agent de stockage de la lumière comprend au moins un aluminate alcalino-terreux représenté par MAl₂O₄, dans lequel M est choisi parmi le magnésium, le calcium, le strontium et le baryum, et au moins un agent de prolongation d'effet à base d'un ou plusieurs des lanthanides : lanthane, cérium, praséodyme, néodyme, prométhium, samarium, europium, gadolinium, terbium, dysprosium, holmium, erbium, thulium, ytterbium et lutécium, de manganèse, d'étain et de bismuth.

2. Matériau de revêtement stockant la lumière selon la revendication 1, dans lequel l'agent antiprécipitation est un polyamino-amide-phosphate cationique ou un sel d'acide polycarboxylique anionique ou neutre.

3. Accessoire de pêche caractérisé en ce qu'il est revêtu d'un matériau de revêtement stockant la lumière constitué d'un liant à base acrylique ou à base uréthane ou à base époxy et d'un agent antiprécipitation, utilisant, en tant qu'agent de stockage de la lumière, un aluminate alcalino-terreux représenté par MAl₂O₄, dans lequel M est l'un ou plusieurs des éléments magnésium, calcium, strontium en baryum, et clans lequel l'agent de prolongation d'effet est utilisé, en choisissant de façon appropriée l'un ou plusieurs parmi les lanthanides : lanthane, cécrium praséodyme, néodyme, prométhium, samarium, europium, gadolinium, terbium, dysprosium, holmium, erbium, thulium, ytterbium et lutécium, le manganèse, l'étain et le bismuth.

4. Matériau de revêtement stockant la lumière selon la revendication 3, dans lequel l'agent antiprécipitation est un polyamino-amide-phosphate cationique ou un sel d'acide polycarboxylique anionique ou neutre.

5. Accessoire de pêche selon la revendication 3 ou 4, caractérisé en ce que l'élément de prolongation d'effet est choisi parmi l'europium, le gadolinium et des mélanges de ceux-ci.

6. Accessoire de pêche selon l'une quelconque des revendications 3 à 5, dans lequel l'aluminate alcalino-terreux est l'aluminate de strontium.

7. Accessoire de pêche selon l'une quelconque des revendications 3 à 5, dans lequel l'aluminate alcalino-terreux est un aluminate de baryum et de magnésium.

8. Accessoire de pêche selon la revendications 7, dans lequel l'aluminate de baryum et de magnésium, présente une composition correspondant pratiquement à la formule Ba_{0,9}Mg₂Al₁₆O₂₇.

9. Accessoire de pêche selon l'une quelconque des revendications 3 à 8 et constitué sous forme d'un hameçon, d'un flotteur, d'une ligne, d'un faux appât, d'une plombée, d'une canne à pêche, d'un anneau de canne à pêche, d'un moulinet, d'un plomb (biizu), d'une feuille pour article de survie, d'un bura, d'un leurre de pêche, d'un ruban, d'une baguette, d'un empennage (kabura) ou d'un insigne.

## Revendications (Revendications pour l'(les) Etat(s) contractant(s) suivant(s): DE, ES, FR, GB, IT)

1. Accessoire de pêche caractérisé en ce qu'il est revêtu d'un matériau de revêtement stockant la lumière constitué d'un liant à base acrylique ou à base uréthane ou à base époxy et un agent antiprécipitation utilisant, en tant qu'agent de stockage de la lumière, un aluminate alcalino-terreux représenté par MAl₂O₄, dans lequel M est un ou plusieurs parmi les éléments magnésium, calcium, strontium et baryum, et dans lequel l'agent de prolongation d'effet est utilisé, en choisissant de façon appropriée un ou plusieurs parmi les lanthanides : lanthane, cérium, praséodyme, néodyme, prométhium, samarium, europium, gadolinium, terbium, dysprosium, holmium, erbium, thulium, ytterbium et lutécium, le manganèse, l'étain et le bismuth.

2. Matériau de revêtement d'accessoire de pêche selon la revendication 1, dans lequel l'agent antiprécipitation est un polyamino-amide-phosphate cationique ou un sel d'acide polycarboxylique anionique ou neutre.

3. Accessoire de pêche selon la revendication 1 ou 2, caractérisé en ce que l'élément de prolongation d'effet est choisi parmi l'europium, le gadolinium et des mélanges de ceux-ci.

4. Accessoire de pêche selon l'une quelconque des revendications 1 à 3, dans lequel l'aluminate alcalino-terreux est l'aluminate de strontium.

5. Accessoire de pêche selon l'une quelconque des revendications 1 à 3, dans lequel l'aluminate alcalino-terreux est un aluminate de baryum et de magnésium.

6. Accessoire de pêche selon la revendication 5, dans lequel l'aluminate de baryum et de magnésium présente une composition correspondant pratiquement à la formule Ba_{0,9}Mg₂Al₁₆O₂₇.

7. Accessoire de pêche selon l'une quelconque des revendications 1 à 6 et constitué sous forme d'un hameçon, d'un flotteur, d'une ligne, d'un faux appât, d'une plombée, d'une canne à pêche, d'un anneau de canne à pêche, d'un moulinet, d'un plomb (biizu), d'une feuille pour article de survie, d'un bura, d'un leurre de pêche, d'un ruban, d'une baguette, d'un empennage (kabura) ou d'un insigne.
